# FASCICULE DE BREVET EUROPEEN

(11) **EP 1 134 558 B1**
(45) Date de publication et mention de la délivrance du brevet: **10.09.2008**
(21) Numéro de dépôt: 01400653.0
(22) Date de dépôt: 13.03.2001
(51) Int. Cl.: G01D 13/28, G12B 11/04

(54) **Indicateur de véhicule automobile comprenant une aiguille perfectionnée**
Kraftfahrzeug- Anzeigegerät mit verbessertem Zeiger
Motor vehicle indicator with improved pointer

(30) Priorité: 16.03.2000 FR 0003379
(43) Date de publication de la demande: 19.09.2001
(73) Titulaire: MAGNETI MARELLI FRANCE, 92721 Nanterre (FR)
(72) Inventeur: Angelini, Marco, 27021 Bereguardo (PV) (IT)
(74) Mandataire: Texier, Christian

(56) Documents cités:
- EP-A- 0 984 249
- FR-A- 2 747 188
- FR-A- 2 753 790

## Description

La présente invention concerne le domaine des indicateurs à aiguille, notamment pour tableaux de bord de véhicules automobiles.

La majorité des aiguilles proposées de nos jours pour des tableaux de bord de véhicules automobiles, comprennent un index formé d'un barreau type guide de lumière et un canon lié audit index, adapté pour être fixé sur un moyen d'entraînement tel qu'un logomètre ou un moteur pas à pas, et généralement adapté pour servir de prise d'entrée de lumière à partir d'une source lumineuse.

L'un des principaux problèmes rencontrés avec les aiguilles connues est la difficulté d'obtenir un éclairage homogène de l'index sur sa longueur à partir d'une zone d'entrée limitée au canon.

De nombreuses structures ont été proposées pour tenter d'accéder à un éclairage quasi homogène de l'index. Cependant à la connaissance de la Demanderesse, les tentatives actuelles n'ont pas été totalement couronnées de succès.

Plus précisément de nombreuses aiguilles comprennent des moyens optiques (réflecteurs, diffuseurs, filtres, etc ...) disposés dans l'index en regard du canon, et adaptés pour dévier dans l'index selon la longueur de celui-ci, au moins une partie du flux lumineux reçu en provenance du canon avec une incidence générale parallèle à l'axe du canon.

De nombreuses aiguilles comprenant de tels moyens optiques dans l'index sont utilisées de nos jours dans les tableaux de bord de véhicules automobiles.

Généralement ces moyens optiques sont réalisés lors du moulage de l'aiguille, sous forme de cavités ou chambres diverses dans l'index. Ils conduisent à des aiguilles de géométrie assez complexe et parfois fragiles, délicates à réaliser et dont la fiabilité n'est pas toujours assurée de façon satisfaisante.

Le document EP 0 984 249 décrit une aiguille pour un appareil indicateur comprenant un canon possédant une enveloppe non cylindrique de révolution, un moyeu, un index et un bouton couvrant, l'index et le bouton étant réalisés dans deux matériaux différents.

Afin de permettre une bonne propagation de la lumière dans l'aiguille, celle-ci est munie de deux surfaces appartenant respectivement au bouton et au moyeu de l'aiguille sur lesquelles se réfléchissent les rayons lumineux.

Le but de la présente invention est de proposer de nouveaux moyens permettant d'améliorer l'homogénéité de l'éclairage des index d'aiguilles indicatrices, par rapport aux structures antérieures connues.

Un autre but auxiliaire de la présente invention est de proposer une nouvelle aiguille de structure plus simple et plus fiable que les aiguilles antérieures connues.

Ce but est atteint dans le cadre de la présente invention grâce à une aiguille présentant les caractéristiques définies dans la revendication 1 annexée.

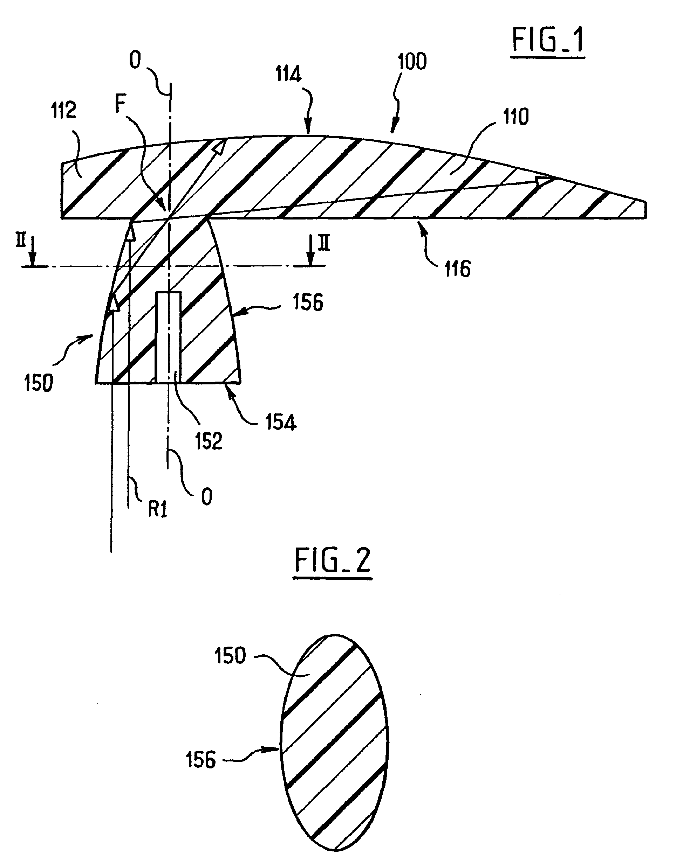

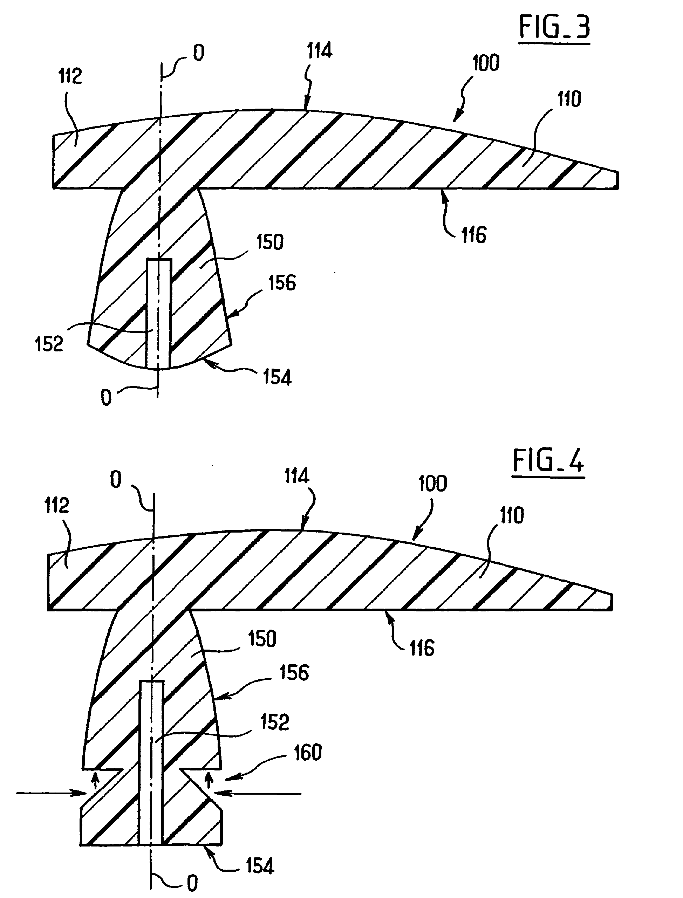

D'autres caractéristiques, buts et avantages de la présente invention apparaîtront à la lecture de la description détaillée qui va suivre et en regard des dessins annexés, donnés à titre d'exemples non limitatifs, et sur lesquels :
. la figure 1 représente une vue en coupe longitudinale d'une aiguille conforme à la présente invention ,
. la figure 2 représente une vue en coupe transversale d'un canon selon le plan de coupe référencé II-II sur la figure 1, d'un mode de réalisation de la présente invention, et
. les figures 3 à 6 représentent des vues en coupe longitudinale d'aiguilles conformes à des variantes de réalisation de la présente invention .

On aperçoit sur la figure 1 annexée une aiguille 100 conforme à la présente invention comprenant un index 110 et un canon 150 qui lui est généralement transversal.

L'index 110 peut faire l'objet de nombreuses variantes dans sa géométrie.

De préférence l'index 110 est effilé en éloignement du canon 150. Par ailleurs comme on le voit sur la figure 1, l'index 110 peut s'étendre, sous forme d'un talon 112, en arrière du canon 150.

La face avant 114 de l'index 110 peut être plane. Cependant de préférence, cette face avant 114 est incurvée, convexe vers l'avant, en éloignement du canon 150.

La face arrière 116 de l'index 110 peut également être plane ou incurvée.

Les flancs de l'index 110 peuvent converger également de préférence en direction de la pointe de celui-ci. Ces flancs peuvent être plans ou par exemple incurvés, légèrement convexes vers l'extérieur.

Le canon 150 est centré sur un axe O-O généralement orthogonal à la direction longitudinale de l'index 110.

De préférence le canon 150 est muni d'un alésage borgne 152 central, qui débouche sur sa face 154 opposée à l'index 110. Cet alésage 152 est adapté pour être chassé sur l'arbre de sortie d'un moyen moteur, tel qu'un logomètre ou un moteur pas à pas.

Comme on l'a indiqué précédemment, dans le cadre de la présente invention, le canon 150 possède une enveloppe 156 non cylindrique de révolution, conformée pour récupérer un flux lumineux injecté dans le canon 150 à partir d'au moins une source lumineuse et répartir ce flux selon des directions multiples dans l'index 110 pour assurer un éclairage au moins quasi-homogène de l'index 110.

Plus précisément selon le mode de réalisation préférentiel illustré sur la figure 1, l'enveloppe externe 156 du canon 150 est délimitée par une génératrice de type parabolique.

L'enveloppe 156 peut ainsi être définie par une surface de révolution autour de l'axe O-O, basée sur cette génératrice parabolique.

Dans ce cas l'axe de parabole de cette génératrice peut être confondu avec l'axe O-O ou être parallèle à l'axe O-O mais excentré par rapport à celui-ci et s'appuyer sur un cercle lui même centré sur l'axe O-O, ou encore être incliné par rapport à celui-ci et sécant de cet axe O-O.

En variante l'enveloppe délimitée par ladite génératrice parabolique peut ne pas être de révolution autour de l'axe O-O.

Dans ce dernier contexte, on peut par exemple réaliser l'enveloppe 156 sous forme d'une surface basée sur une génératrice parabolique dont l'axe de parabole, parallèle à l'axe O-O ou incliné par rapport à celui-ci, (et d'une façon plus générale la génératrice elle même) s'appuie sur une courbe non circulaire, par exemple perpendiculaire à l'axe O-O. On a par exemple illustré la coupe transversale d'un canon répondant à cette définition, sur la figure 2, dans le cas d'une courbe du genre ellipse servant d'appui à l'axe de parabole de la génératrice. Dans ce cas de préférence la grande direction de la courbe sur laquelle s'appuie l'axe de parabole est transversale à la direction d'élongation de l'index.

Le foyer F de la génératrice parabolique du canon 150 est de préférence situé au niveau de la zone de liaison entre le canon 150 et l'index 110.

Plus précisément encore, de préférence, le foyer F de la génératrice parabolique du canon 150 est situé sensiblement dans le plan de la surface inférieure 116 de l'index 110. Dans ce cas on comprend à l'examen de la figure 1, que les rayons lumineux R1 qui atteignent l'extrémité de la génératrice parabolique située dans ce plan, sont déviés sensiblement dans ce plan et peuvent atteindre l'extrémité effilée de l'index 110.

De préférence la face inférieure 154 du canon est plane et orthogonale à l'axe O-O comme on l'a illustré sur la figure 1. Ainsi le canon 150 peut recevoir un flux lumineux incident orienté parallèlement à l'axe O-O, en provenance de toutes sources lumineuses adéquates, sans déviation lors de la traversée de la face d'entrée 154 ou encore recevoir un flux lumineux convergent ou divergent et répartir ce flux par réfraction de façon contrôlée sur l'enveloppe 156.

Cependant le canon 150 peut être muni de tous moyens équivalents pour recevoir et guider parallèlement ou non à l'axe O-O, un flux lumineux reçu de l'extérieur. Ainsi en variante comme illustré sur la figure 4 sous la référence générale 160, le canon 150 peut être muni de moyens à effet de prisme adaptés pour dévier un flux lumineux d'incidence radiale, dans une direction parallèle à l'axe O-O (ou en variante non parallèle à l'axe O-O), en direction de l'enveloppe 156.

Selon encore une autre variante conforme à la présente invention, comme on le voit sur la figure 3, la surface inférieure 154 du canon servant de face d'entrée au flux lumineux peut ne pas être plane, mais incurvée, par exemple convexe vers l'extérieur, et de révolution ou non, pour contrôler par réfraction la répartition du flux incident sur la surface périphérique 156.

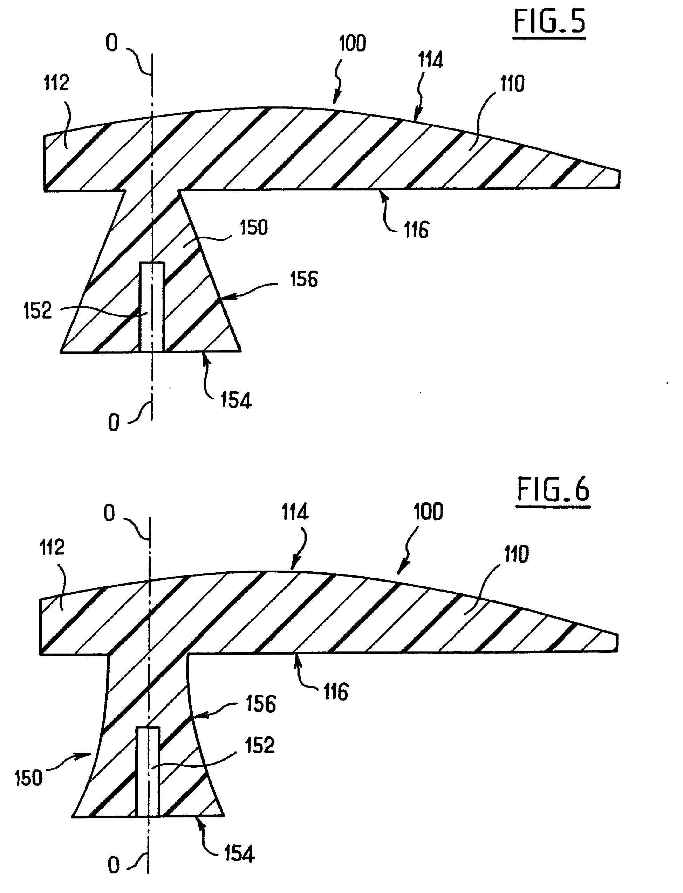

Selon d'autres variantes de réalisation conformes à la présente invention, la génératrice définissant l'enveloppe 156 peut être rectiligne, convergent vers l'axe O-O en rapprochement de l'index 110, comme illustré sur la figure 5 ou hyperpolique, concave vers l'extérieur, là encore de préférence convergent vers l'axe O-O en rapprochement de l'index 110, comme illustré sur la figure 6, voire de toute autre géométrie adaptée pour assurer une répartition optimale du flux lumineux dans l'index 110, en fonction de l'incidence.

Selon les modes de réalisation précédemment décrits, la génératrice délimitant la surface d'enveloppe 156 est identique en tout point de la périphérie du canon 150, même si cette surface d'enveloppe 156 n'est pas de révolution autour de l'axe O-O. En variante cependant on peut envisager de réaliser la surface d'enveloppe 156 à l'aide d'une génératrice évolutive avec la position angulaire de cette génératrice autour de l'axe O-O.

Selon encore une autre variante de la présente invention, le coefficient de réflexion de la surface d'enveloppe 156 peut être contrôlé, par exemple par contrôle de l'état de surface, pour évoluer d'une zone à l'autre de cette surface d'enveloppe 156, notamment en fonction de la position angulaire autour de l'axe O-O pour garantir un éclairage homogène de l'index 110. Dans ce contexte la zone arrière du canon 150 conçue pour renvoyer le flux vers l'avant de l'index 110 possède de préférence un coefficient de réflexion supérieur à celui des zones latérales et de la zone avant du canon 150 conçues pour renvoyer le flux vers les flancs et le talon de l'index 110.

Par ailleurs dans le cadre de la présente invention, l'index 110 peut être muni de moyens aptes à coopérer avec le canon pour parfaire l'homogénéité de l'éclairage de l'index 110. Ces moyens dans leur définition la plus générale peuvent notamment comprendre des éléments, tels que des cavités ou des moyens de réflexion formés dans l'index ou des dépôts formés sur celui-ci, en regard du canon, pour éviter qu'une partie importante du flux provenant du canon n'émerge de l'aiguille au niveau de la zone de l'index située en regard de ce canon, au détriment des zones de l'index éloignées de celui-ci, conduisant ainsi à une zone de plus fort éclairage en regard du canon.

De tels moyens peuvent par exemple être formés d'une chambre borgne incurvée, concave vers le canon 150, qui débouche sur la face inférieure ou arrière 116 de l'index 110, en arrière du canon 150 et qui couvre au moins le canon 150 dans son extension longitudinale, telle que définie dans une demande de brevet parallèle déposée par la Demanderesse.

L'aiguille 100 peut être réalisée en tout matériau approprié, optiquement transparent, apte à former un barreau guide de lumière. Il peut s'agir par exemple de polymétacrylate de méthyle ou de tout matériau équivalent.

De préférence l'aiguille 100 précitée est complétée par un capuchon opaque. Celui-ci peut faire l'objet de nombreuses variantes de réalisation. De préférence le capuchon comprend une jupe cylindrique centrée autour d'un axe généralement coaxial à l'axe du canon 150, et d'une paroi transversale qui obture la jupe à son extrémité avant pour entourer l'index 110 , y compris le talon 112 de celui-ci, autour du canon 150. Le capuchon interdit de ce fait toute fuite de lumière entre l'index 110 et ledit capuchon et parfait l'esthétique de l'aiguille.

Ce capuchon peut être rajouté ou surmoulé sur l'aiguille 110/150.

Bien entendu la présente invention n'est pas limitée aux modes de réalisation particuliers qui viennent d'être décrits, mais s'étend à toutes variantes conformes aux revendications.

## Revendications

1. Aiguille pour appareil indicateur de véhicule automobile, comprenant un canon (150) adapté pour être fixé sur un moyen moteur et un index (110) qui lui est généralement transversal, le canon (150) possédant une enveloppe (156) non cylindrique de révolution conformée pour récupérer un flux lumineux injecté dans le canon à partir d'au moins une source lumineuse et répartir ce flux selon des directions multiples dans l'index (110) pour assurer un éclairage au moins quasi-homogène de l'index (110), **caractérisée par le fait que** le coefficient de réflexion de la surface d'enveloppe (156) du canon (150) est contrôlé pour évoluer d'une zone à l'autre de cette surface d'enveloppe (156).

2. Aiguille selon la revendication 1, **caractérisée par le fait que** l'enveloppe externe (156) du canon (150) est délimitée par une génératrice de type parabolique.

3. Aiguille selon la revendication 1, **caractérisée par le fait que** l'enveloppe externe (156) du canon (150) est délimitée par une génératrice de type rectiligne.

4. Aiguille selon la revendication 1, **caractérisée par le fait que** l'enveloppe externe (156) du canon (150) est délimitée par une génératrice de type hyperbolique.

5. Aiguille selon l'une des revendications 1 à 4, **caractérisée par le fait que** l'enveloppe externe (156) du canon (150) est délimitée par une surface de révolution autour de l'axe central du canon (150).

6. Aiguille selon l'une des revendications 1, 2 et 5, **caractérisée par le fait que** l'axe de parabole de la génératrice est confondu avec l'axe central du canon (150).

7. Aiguille selon l'une des revendications 1, 2 et 5, **caractérisée par le fait que** l'axe de parabole de la génératrice est parallèle à l'axe central du canon (150), excentré par rapport à celui-ci et s'appuie sur un cercle lui même centré sur l'axe central du canon (150).

8. Aiguille selon l'une des revendications 1, 2 et 5, **caractérisée par le fait que** l'axe de parabole de la génératrice est incliné par rapport à l'axe central du canon (150).

9. Aiguille selon la revendication 8, **caractérisée par le fait que** l'axe de parabole de la génératrice est sécant de l'axe central du canon (150).

10. Aiguille selon l'une des revendications 1 à 4, **caractérisée par le fait que** l'enveloppe externe (156) du canon (150) est délimitée par une surface qui n'est pas de révolution autour de l'axe central du canon (150).

11. Aiguille selon la revendication 10, **caractérisée par le fait que** la génératrice de la surface d'enveloppe (156) du canon (150) s'appuie sur une courbe non circulaire, perpendiculaire à l'axe central du canon (150).

12. Aiguille selon la revendication 11, **caractérisée par le fait que** ladite courbe non circulaire est du genre ellipse.

13. Aiguille selon l'une des revendications 11 ou 12, **caractérisée par le fait que** la grande direction de la courbe non circulaire sur laquelle s'appuie la génératrice est transversale à la direction d'élongation de l'index (110).

14. Aiguille selon l'une des revendications 10 à 13, **caractérisée par le fait que** l'enveloppe (156) du canon (150) est formée d'une surface basée sur une génératrice parabolique dont l'axe de parabole est parallèle à l'axe central du canon (150).

15. Aiguille selon l'une des revendications 10 à 13, **caractérisée par le fait que** l'enveloppe (156) du canon (150) est formée d'une surface basée sur une génératrice parabolique dont l'axe de parabole est incliné par rapport à l'axe central du canon (150).

16. Aiguille selon l'une des revendications 1 et 5 à 15, **caractérisée par le fait que** le foyer F de la génératrice parabolique du canon (150) est situé au niveau de la zone de liaison entre le canon (150) et l'index (110).

17. Aiguille selon l'une des revendications 1 et 5 à 16, **caractérisée par le fait que** le foyer F de la génératrice parabolique du canon (150) est situé sensiblement dans le plan de la surface inférieure (116) de l'index (110).

18. Aiguille selon l'une des revendications 1 à 17, **caractérisée par le fait que** le canon (150) est adapté pour recevoir un flux lumineux incident orienté parallèlement à son axe central.

19. Aiguille selon l'une des revendications 1 à 17, **caractérisée par le fait que** le canon (150) est muni de moyens à effet de prisme adaptés pour dévier un flux lumineux d'incidence radiale, en direction de l'index.

20. Aiguille selon l'une des revendications 1 à 17 et 19, **caractérisée par le fait que** le canon (150) est adapté pour recevoir un flux lumineux incident divergent ou convergent.

21. Aiguille selon l'une des revendications 1 à 20, **caractérisée par le fait que** la face inférieure (154) du canon (150) est plane et orthogonale à l'axe central du canon (150).

22. Aiguille selon l'une des revendications 1 à 20, **caractérisée par le fait que** la face inférieure (154) du canon (150) est incurvée.

23. Aiguille selon l'une des revendications 1 à 22, **caractérisée par le fait que** la génératrice définissant l'enveloppe (156) du canon converge vers l'axe central du canon (150) en rapprochement de l'index (110).

24. Aiguille selon l'une des revendications 1 à 23, **caractérisée par le fait que** la génératrice délimitant la surface d'enveloppe (156) du canon (150) est identique en tout point de la périphérie du canon (150).

25. Aiguille selon l'une des revendications 1 à 23, **caractérisée par le fait que** la génératrice délimitant la surface d'enveloppe (156) du canon (150) est évolutive avec la position angulaire de cette génératrice autour de l'axe central.

26. Aiguille selon l'une des revendications 1 à 25, **caractérisée par le fait que** l'on contrôle l'état de surface de la surface d'enveloppe (156) du canon (150) d'une zone à l'autre de cette surface enveloppe (156), notamment en fonction de la position angulaire autour de l'axe central du canon (150).

27. Aiguille selon la revendication 26, **caractérisée par le fait que** la zone arrière du canon (150) conçue pour renvoyer le flux vers l'avant de l'index (110) possède un coefficient de réflexion supérieur à celui des zones latérales et de la zone avant du canon (150) conçues pour renvoyer le flux vers les flancs et le talon de l'index (110).

28. Aiguille selon l'une des revendications 1 à 27, **caractérisée par le fait que** l'index (110) est muni de moyens optiques aptes à coopérer avec le canon (150) pour parfaire l'homogénéité de l'éclairage de l'index (110).

29. Aiguille selon la revendication 28, **caractérisée par le fait que** les moyens optiques comprennent des éléments, tels que des cavités ou des moyens de réflexion formés dans l'index ou des dépôts formés sur celui-ci, en regard du canon (150), pour éviter qu'une partie importante du flux provenant du canon n'émerge de l'aiguille au niveau de la zone de l'index située en regard de ce canon.

30. Aiguille selon l'une des revendications 28 ou 29, **caractérisée par le fait que** les moyens optiques comprennent une chambre borgne incurvée, concave vers le canon (150), qui débouche sur la face inférieure ou arrière (116) de l'index (110), en arrière du canon (150) et qui couvre au moins le canon (150) dans son extension longitudinale.

## Claims

1. A needle pointer for a motor vehicle indicator apparatus, comprising a barrel (150) adapted so as to be attached on a drive-motor means and an indicator part (110) which is generally transverse to it, the barrel (150) having a non-cylindrical rotation envelope (156) conformed so as to recover a light flux injected into the barrel from at least one light source and distribute this flux in multiple directions in the indicator part (110) in order to provide at least quasi-homogenous lighting of the indicator part (110), **characterized by** the fact that the reflection coefficient of the envelope surface (156) of the barrel (150) is controlled in order to change from one area to the other of this envelope surface (156).

2. The needle pointer according to claim 1, **characterized by** the fact that the external envelope (156) of the barrel (150) is delimited by a generatrix of the parabolic type.

3. The needle pointer according to claim 1, **characterized by** the fact that the external envelope (156) of the barrel (150) is delimited by a generatrix of the rectilinear type.

4. The needle pointer according to claim 1, **characterized by** the fact that the external envelope (156) of the barrel (150) is delimited by a generatrix of the hyperbolic type.

5. The needle pointer according to any of claims 1 to 4, **characterized in that** the external envelope (156) of the barrel (150) is delimited by a rotation surface around the central axis of the barrel (150).

6. The needle pointer according to any of claims 1, 2 and 5, **characterized by** the fact that the parabola axis of the generatrix coincides with the central axis of the barrel (150).

7. The needle pointer according to any of claims 1, 2 and 5, **characterized by** the fact that the parabola axis of the generatrix is parallel to the central axis of the barrel (150), excentered relatively to the latter and is supported on a circle itself centered on the central axis of the barrel (150).

8. The needle pointer according to any of claims 1, 2 and 5, **characterized by** the fact that the parabola axis of the generatrix is tilted relatively to the central axis of the barrel (150).

9. The needle pointer according to claim 8, **characterized by** the fact that the parabola axis of the generatrix intersects the central axis of the barrel (150).

10. The needle pointer according to any of claims 1 to 4, **characterized by** the fact that the external envelope (156) of the barrel (150) is delimited by a surface which is not in rotation around the central axis of the barrel (150).

11. The needle pointer according to claim 10, **characterized by** the fact that the generatrix of the envelope surface (156) of the barrel (150) is supported on a non-circular curve, perpendicular to the central axis of the barrel (150).

12. The needle pointer according to claim 11, **characterized by** the fact that said non-circular curve is of the elliptical kind.

13. The needle pointer according to any of claims 11 or 12, **characterized by** the fact that the major direction of the non-circular curve on which the generatrix is supported, is transverse to the elongation direction of the indicator part (110).

14. The needle pointer according to any of claims 10 to 13, **characterized by** the fact that the envelope (156) of the barrel (150) is formed with a surface based on a parabolic generatrix, the parabola axis of which is parallel to the central axis of the barrel (150) .

15. The needle pointer according to any of claims 10 to 13, **characterized by** the fact that the envelope (156) of the barrel (150) is formed with a surface based on a parabolic generatrix, the parabola axis of which is tilted relatively to the central axis of the barrel (150).

16. The needle pointer according to any of claims 1 and 5 to 15, **characterized by** the fact that the focus F of the parabolic generatrix of the barrel (150) is located at the connecting area between the barrel (150) and the indicator part (110).

17. The needle pointer according to any of claims 1 and 5 to 16, **characterized by** the fact that the focus F of the parabolic generatrix of the barrel (150) is substantially located in the plane of the lower surface (116) of the indicator part (110).

18. The needle pointer according to any of claims 1 to 17, **characterized by** the fact that the barrel (150) is adapted in order to receive an incident light flux oriented parallel to its central axis.

19. The needle pointer according to any of claims 1 to 17, **characterized by** the fact that the barrel (150) is provided with adapted prism effect means for deviating a light flux of radial incidence, towards the indicator part.

20. The needle pointer according to any of claims 1 to 17 and 19, **characterized by** the fact that the barrel (150) is adapted in order to receive a divergent or convergent incident light flux.

21. The needle pointer according to any of claims 1 to 20, **characterized by** the fact that the lower face (154) of the barrel (150) is planar and orthogonal to the central axis of the barrel (150).

22. The needle pointer according to any of claims 1 to 20, **characterized by** the fact that the lower face (154) of the barrel (150) is curved.

23. The needle pointer according to any of claims 1 to 22, **characterized by** the fact that the generatrix defining the envelope (156) of the barrel converges towards the central axis of the barrel (150) while approaching the indicator part (110).

24. The needle pointer according to any of claims 1 to 23, **characterized by** the fact that the generatrix delimiting the envelope surface (156) of the barrel (150) is identical at any point of the periphery of the barrel (150).

25. The needle pointer according to any of claims 1 to 23, **characterized by** the fact that the generatrix delimiting the envelope surface (156) of the barrel (150) may change with the angular position of this generatrix around the central axis.

26. The needle pointer according to any of claims 1 to 25, **characterized by** the fact that the surface condition of the envelope surface (156) of the barrel (150) is controlled from one area to the other of this envelope surface (156) notably depending on the angular position around the central axis of the barrel (150).

27. The needle pointer according to claim 26, **characterized by** the fact that the rear area of the barrel (150) designed for sending back the flux towards the front of the indicator part (110) has a reflection coefficient greater than that of the side areas and of the front area of the barrel (150) designed for sending back the flux towards the flanks and heel of the indicator part (110).

28. The needle pointer according to any of claims 1 to 27, **characterized by** the fact that the indicator part (110) is provided with optical means capable of cooperating with the barrel (150) in order to complete homogeneity of the illumination of the indicator part (110).

29. The needle pointer according to claim 28, **characterized by** the fact that the optical means comprise elements such as cavities or reflection means formed in the indicator part, or deposits formed on the latter, facing the barrel (150), in order to avoid that a significant portion of the flux from the barrel emerges from the needle pointer at the area of the indicator part located facing this barrel.

30. The needle pointer according to any of claims 28 or 29, **characterized by** the fact that the optical means comprise a curved blind chamber, concave towards the barrel (150), which opens out onto the lower or rear face (116) of the indicator part (110), at the rear of the barrel (150) and which covers at least the barrel (150) in its longitudinal extension.

## Patentansprüche

1. Nadel für Kraftfahrzeug-Anzeigegerät, umfassend einen Zylinder (150), der dazu geeignet ist, auf eine Motornabe befestigt zu werden, und einen Zeiger (110), der generell transversal ist, wobei der Zylinder (150) eine nicht zylindrische Hülle (156) aufweist, deren Rotation angepasst ist, um einen Lichtstrom aufzufangen, der anhand von mindestens einer Lichtquelle in den Zylinder eingeführt wird, und diesen Strom nach mehrfachen Richtungen im Zeiger (10) zu verteilen, um eine zumindest quasihomogene Beleuchtung des Zeigers (110) zu gewährleisten, **dadurch gekennzeichnet, dass** der Reflexionsgrad der Hüllenfläche (156) des Zylinders (150) geprüft wird, um sich von einer Zone zur anderen von dieser Hüllenfläche (156) weitern zu entwickeln.

2. Nadel nach Anspruch 1, **dadurch gekennzeichnet, dass** die äußere Hülle (156) des Zylinders (150) durch eine Erzeugende des parabolischen Typs begrenzt ist.

3. Nadel nach Anspruch 1, **dadurch gekennzeichnet, dass** die äußere Hülle (156) des Zylinders (150) durch eine Erzeugende des geradlinigen Typs begrenzt ist.

4. Nadel nach Anspruch 1, **dadurch gekennzeichnet, dass** die äußere Hülle (156) des Zylinders (150) durch eine Erzeugende des hyperbolischen Typs begrenzt ist.

5. Nadel nach einem der Ansprüche 1 bis 4, **dadurch gekennzeichnet, dass** die äußere Hülle (156) des Zylinders (150) durch eine Rotationsfläche um die Zentralachse des Zylinders (150) begrenzt ist.

6. Nadel nach einem der Ansprüche 1, 2 und 5, **dadurch gekennzeichnet, dass** die Parabolachse der Erzeugenden mit der Zentralachse des Zylinders (150) verbunden ist.

7. Nadel nach einem der Ansprüche 1, 2 und 5, **dadurch gekennzeichnet, dass** die Parabolachse der Erzeugenden parallel zur Zentralachse des Zylinders (150) ist, dieser gegenüber exzentrisch ist und sich auf einen Kreis stützt, der seinerseits auf der Zentralachse (150) des Zylinders zentriert ist.

8. Nadel nach einem der Ansprüche 1, 2 und 5, **dadurch gekennzeichnet, dass** die Parabolachse der Erzeugenden im Verhältnis zur Zentralachse des Zylinders (150) geneigt ist.

9. Nadel nach Anspruch 8, **dadurch gekennzeichnet, dass** die Parabolachse der Erzeugenden sekant zur Zentralachse des Zylinders (150) ist.

10. Nadel nach einem der Ansprüche 1 bis 4, **dadurch gekennzeichnet, dass** die äußere Hülle (156) des Zylinders (150) durch eine Fläche begrenzt ist, die nicht um die Zentralachse des Zylinders (150) rotiert.

11. Nadel nach Anspruch 10, **dadurch gekennzeichnet, dass** sich die Erzeugende der Hüllenfläche (156) des Zylinders (150) auf eine nicht kreisförmige Kurve stützt, die rechtwinklig zur Zentralachse des Zylinders (150) ist.

12. Nadel nach Anspruch 11, **dadurch gekennzeichnet, dass** die genannte nicht kreisförmige Kurve des Typs einer Ellipse ist.

13. Nadel nach einem der Ansprüche 11 oder 12, **dadurch gekennzeichnet, dass** die große Richtung der nicht kreisförmigen Kurve, auf die sich die Erzeugende stützt, transversal zur Dehnungsrichtung des Zeigers (110) ist.

14. Nadel nach einem der Ansprüche 10 bis 13, **dadurch gekennzeichnet, dass** die Hülle (156) des Zylinders (150) aus einer Fläche gebildet ist, die auf einer parabolischen Erzeugenden basiert, deren Parabolachse parallel zur Zentralachse des Zylinders (150) ist.

15. Nadel nach einem der Ansprüche 10 bis 13, **dadurch gekennzeichnet, dass** die Hülle (156) des Zylinders (150) aus einer Fläche gebildet ist, die auf einer parabolischen Erzeugenden basiert, deren Parabolachse im Verhältnis zur Zentralachse des Zylinders (150) geneigt ist.

16. Nadel nach einem der Ansprüche 1 und 5 bis 15, **dadurch gekennzeichnet, dass** sich der Fokus F der parabolischen Erzeugenden des Zylinders (150) auf Ebene der Verbindungszone zwischen dem Zylinder (150) und dem Zeiger (110) befindet.

17. Nadel nach einem der Ansprüche 1 und 5 bis 16, **dadurch gekennzeichnet, dass** sich der Fokus F der parabolischen Erzeugenden des Zylinders (150) wesentlich in der Ebene der unteren Fläche (116) des Zeigers (110) befindet.

18. Nadel nach einem der Ansprüche 1 bis 17, **dadurch gekennzeichnet, dass** der Zylinder (150) dazu geeignet ist, einen einfallenden Lichtstrom zu empfangen, der parallel zu seiner Zentralachse orientiert ist.

19. Nadel nach einem der Ansprüche 1 bis 17, **dadurch gekennzeichnet, dass** der Zylinder (150) mit Mitteln mit Prismaeffekt ausgerüstet ist, die dazu geeignet sind, einen Lichtstrom mit radialem Einfall in Richtung des Zeigers abzulenken.

20. Nadel nach einem der Ansprüche 1 bis 17 und 19, **dadurch gekennzeichnet, dass** der Zylinder (150) dazu geeignet ist, einen divergenten oder konvergenten einfallenden Lichtstrom zu empfangen.

21. Nadel nach einem der Ansprüche 1 bis 20, **dadurch gekennzeichnet, dass** die untere Seite (154) des Zylinders (150) eben und orthogonal zur Zentralachse des Zylinders (150) ist.

22. Nadel nach einem der Ansprüche 1 bis 20, **dadurch gekennzeichnet, dass** die untere Seite (154) des Zylinders (150) einwärts gekrümmt ist.

23. Nadel nach einem der Ansprüche 1 bis 22, **dadurch gekennzeichnet, dass** die Erzeugende, die die Hülle (156) des Zylinders definiert, zur Zentralachse des Zylinders (150) in Annäherung des Zeigers (110) konvergiert.

24. Nadel nach einem der Ansprüche 1 bis 23, **dadurch gekennzeichnet, dass** die Erzeugende, die die Hüllenfläche (156) des Zylinders (150) begrenzt, der Peripherie des Zylinders (150) voll und ganz entspricht.

25. Nadel nach einem der Ansprüche 1 bis 23, **dadurch gekennzeichnet, dass** die Erzeugende, die die Hüllenfläche (156) des Zylinders (150) begrenzt, evolutiv mit der Winkelposition dieser Erzeugenden um die Zentralachse ist.

26. Nadel nach einem der Ansprüche 1 bis 25, **dadurch gekennzeichnet, dass** der Flächenzustand der Hüllenfläche (156) des Zylinders (150) von einer Zone zur anderen von dieser Hüllenfläche (156) insbesondere in Abhängigkeit von der Winkelposition um die Zentralachse des Zylinders (150) geprüft wird.

27. Nadel nach Anspruch 26, **dadurch gekennzeichnet, dass** die hintere Zone des Zylinders (150), die ausgelegt ist, um den Strom zum vorderen Bereich des Zeigers (110) zu senden, einen Reflexionsgrad aufweist, der größer als derjenige der seitlichen Zonen und der vorderen Zone des Zylinders (150) ist, die ausgelegt sind, um den Strom zu den Flanken und zum Fuß des Zeigers (110) zu senden.

28. Nadel nach einem der Ansprüche 1 bis 27, **dadurch gekennzeichnet, dass** der Zeiger (110) mit optischen Mitteln ausgerüstet ist, die dazu geeignet sind, gemeinsam mit dem Zylinder (150) zu wirken, um die Homogenität der Beleuchtung des Zeigers (110) zu vollenden.

29. Nadel nach Anspruch 28, **dadurch gekennzeichnet, dass** die optischen Mittel Elemente, wie Hohlräume oder Reflexionsmittel, die im Zeiger gebildet sind, oder auf ihm gebildete Ablagerungen, gegenüber dem Zylinder (150) umfassen, um zu vermeiden, dass ein bedeutender Teil des vom Zylinder kommenden Stromes aus der Nadel auf Ebene der Zone des Zeigers gegenüber diesem Zylinder austritt.

30. Nadel nach einem der Ansprüche 28 bis 29, **dadurch gekennzeichnet, dass** die optischen Mittel eine einwärts gekrümmte blinde Kammer, die konkav zum Zylinder (150) ist, umfassen, die an der unteren oder hinteren Seite (116) der Zeiger (110), hinter dem Zylinder (150) einmündet und die zumindest den Zylinder (150) in seiner longitudinalen Dehnung deckt.
